# EUROPEAN PATENT APPLICATION

(11) **EP 2 991 386 A1**
(43) Date of publication of application: **02.03.2016**
(21) Application number: 14787859.9
(22) Date of filing: 23.04.2014
(51) Int. Cl.: H04S 7/00, B60R 11/02, G10K 15/00, H04R 1/40, H04R 3/12, H04S 5/02

(54) **VEHICLE ACOUSTIC CONTROL DEVICE, AND VEHICLE ACOUSTIC CONTROL METHOD**

(30) Priority: 24.04.2013 JP 2013091682; 24.04.2013 JP 2013091684
(71) Applicant: Nissan Motor Co., Ltd., Yokohama-shi, Kanagawa 221-0023 (JP)
(72) Inventor: SHIOZAWA, Yuuki, Atsugi-shi Kanagawa 243-0123 (JP); SUZUKI, Tatsuya, Atsugi-shi Kanagawa 243-0123 (JP); OURA, Kazuma, Atsugi-shi Kanagawa 243-0123 (JP)
(74) Representative: Grünecker Patent- und Rechtsanwälte PartG mbB
(86) International application number: PCT/JP2014/002290
(87) International publication number: WO 2014/174840

(57) **Abstract**

A plurality of speakers (23) disposed in a front and a rear of a passenger and a controller (21) configured to control a sound field in a vehicle cabin by individually driving the plurality of speakers (23). The controller (21) is configured, when an operation input for changing an acceleration/deceleration behavior of the vehicle is made, to set a normative acceleration/deceleration GxT depending on the operation input, to detect an actual acceleration/deceleration GxR, and to displace the sound field in the vehicle cabin in the direction of a change in the actual acceleration/deceleration behavior of the vehicle depending on the deviation ΔG of the actual acceleration/deceleration GxR relative to the normative acceleration/deceleration GxT. That is, a change of an acceleration/deceleration behavior depending on the operation input is rendered before the change of the actual acceleration/deceleration behavior of the vehicle.

## Description

### Technical Field

The present invention relates to a vehicle acoustic control device and a vehicle acoustic control method.

### Background Art

PTL 1 focuses on the fact that a head portion of a driver moves following a change of a vehicle behavior, and proposes to keep a desired acoustic effect by estimating a motion of the head portion of the driver from map information and a travel state of a vehicle, and by controlling a sound field in a vehicle cabin to follow the motion.

### Citation List

### Patent Literature

PTL 1: JP 4305333 B

### Summary of Invention

### Technical Problem

The above-described technology of PTL 1 attempts matching between such a motion of the driver and a motion of the sound field in the vehicle cabin. In general, however, the driver imagines a vehicle behavior after his/her driving operation based on the driving operation. Thus mismatch between the imagined vehicle behavior and the motion of the sound field may result in deterioration of a feeling of operation.

It is an object of the present invention to improve the matching between the imagined vehicle behavior and the motion of the sound field in the vehicle cabin.

### Solution to Problem

According to an embodiment of the present disclosure, there is provided a vehicle acoustic control device including a plurality of speakers each disposed on a periphery of a passenger and controlling a sound field in a vehicle cabin by individually driving the plurality of speakers. Then, an acceleration/deceleration operation is detected, an acceleration/deceleration behavior is estimated based on the acceleration/deceleration operation, an actual acceleration/deceleration behavior of a vehicle in acceleration/deceleration is detected, and when the acceleration/deceleration operation is detected, the sound field in the vehicle cabin is changed in a direction of a change in the actual acceleration/deceleration behavior depending on an deviation between the estimated acceleration/deceleration behavior and the actual acceleration/deceleration behavior.

### Advantageous Effects of Invention

According to an embodiment of the present embodiment, by changing the sound field in the vehicle cabin in the direction of the change in the actual acceleration/deceleration behavior of the vehicle depending on the deviation between the estimated acceleration/deceleration behavior and the actual acceleration/deceleration behavior, a change of an acceleration/deceleration behavior depending on the acceleration/deceleration operation can be rendered before a change of an actual acceleration/deceleration behavior of the vehicle. Therefore, the matching between the imagined vehicle behavior and the motion of the sound field in the vehicle cabin can be improved.

### Brief Description of Drawings

FIG. 1 is a configuration diagram of a vehicle acoustic control device;
FIG. 2 is a block diagram illustrating an example of acoustic control processing in a first embodiment;
FIG. 3 is an example of a map for use in setting a sound field displacement amount β;
FIG. 4 is an example of the map for use in setting the sound field displacement amount β (dead band, limit);
FIG. 5 is an example of the map for use in setting the sound field displacement amount β (hysteresis);
FIG. 6 is a view schematically illustrating a vehicle cabin space when viewed from above;
FIG. 7 is a flowchart illustrating an example of the acoustic control processing in the first embodiment;
FIG. 8 is a time chart explaining a response difference in an actual vehicle behavior;
FIG. 9 is a time chart explaining recognition timing of a behavior change;
FIGs. 10A and 10B are views explaining virtual walls;
FIG. 11 is a block diagram illustrating an example of acoustic control processing in a second embodiment;
FIG. 12 is an example of the map for use in setting the sound field displacement amount β;
FIG. 13 is an example of the map for use in setting the sound field displacement amount β (dead band, limit);
FIG. 14 is an example of the map for use in setting the sound field displacement amount β (hysteresis); and
FIG. 15 is a flowchart illustrating an example of the acoustic control processing in the second embodiment.

### Description of Embodiments

A description is made below of embodiments of the present invention based on the drawings.

### (First Embodiment)

### (Configuration)

First, a description is made of a configuration of a vehicle acoustic control device.

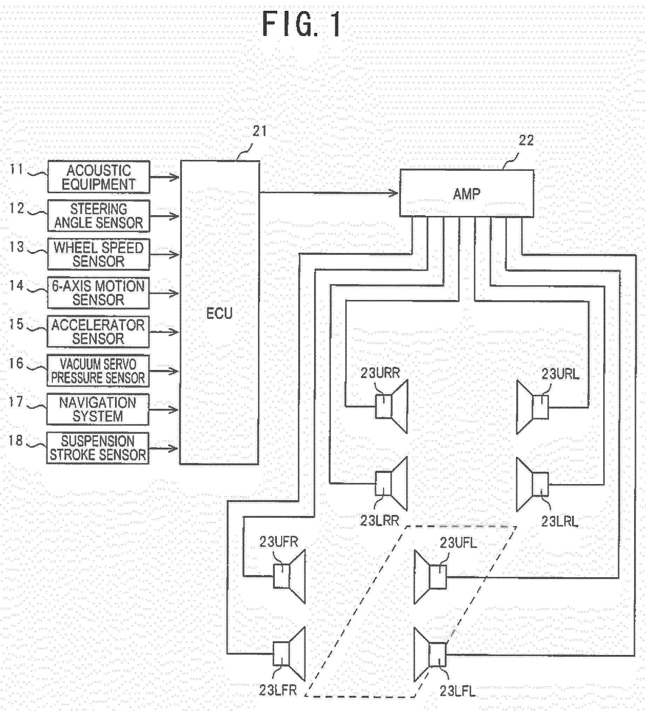

FIG. 1 is a configuration diagram of the vehicle acoustic control device.

The vehicle acoustic control device is mounted on an automobile, and includes: acoustic equipment 11; a steering angle sensor 12; a wheel speed sensor 13; a 6-axis motion sensor 14; an accelerator sensor 15; a vacuum servo pressure sensor 16; a navigation system 17; a suspension stroke sensor 18; and a controller 21.

The acoustic equipment 11 outputs sound signals that enable so-called stereophonic reproduction of reproducing a multiple-channel sound. This acoustic equipment 11 is composed, for example, of a CD drive, a DVD drive, a hard disk drive, a flash memory drive, an AM/FM/TV tuner, a portable audio player or the like. That is to say, by the CD drive, the DVD drive, the hard disk drive, the flash memory drive or the like, sound information is read out from a variety of recording media, and so on, and the sound information is received by a wireless communication made through such an AM/FM/TV tuner or the like, the sound information is inputted from the portable audio player connected through a USB interface or a wireless communication module or the like, and so on. The acoustic equipment 11 outputs the acquired sound signal to the controller 21.

The steering angle sensor 12 is composed of a rotary encoder, and detects a steering angle θs of a steering shaft. When a disc-like scale rotates together with the steering shaft, this steering angle sensor 12 detects light, which transmits through a slit of the scale, with two phototransistors, and outputs a pulse signal, which follows rotation of the steering shaft, to the controller 21. The controller 21 determines the steering angle θs of the steering shaft from the pulse signal inputted thereto. Note that the controller 21 treats clockwise turning as a positive value, and treats counterclockwise turning as a negative value.

The wheel speed sensor 13 detects wheel speeds VwFL to VwRR of the respective wheels. For example, this wheel speed sensor 13 detects magnetic field lines of a sensor rotor by using a detection circuit, converts a change of a magnetic field, which follows rotation of the sensor rotor, into a current signal, and outputs the current signal to the controller 21. The controller 21 determines the wheel speeds VwFL to VwRR from the current signal inputted thereto.

In three axes (X-axis, Y-axis, Z-axis) perpendicular to one another, the 6-taxis motion sensor 14 detects accelerations (Gx, Gy, Gz) in directions of the respective axes and angular velocities (ωx, ωy, ωz) about the respective axes. Here, a longitudinal direction of a vehicle body is defined as the X-axis, a crosswise direction of the vehicle body is defined as the Y-axis, and a vertical direction of the vehicle body is defined as the Z-axis. In a case of the acceleration, for example, this 6-axis motion sensor 14 detects positional displacements of movable electrodes with respect to fixed electrodes as changes of electrostatic capacitances, converts the changes of the electrostatic capacitances into voltage signals proportional to accelerations in the respective axis directions and to orientations of the accelerations, and outputs the voltage signals to the controller 21. The controller 21 determines the accelerations (Gx, Gy, Gz) from the voltage signals inputted thereto.

Note that the 6-axis motion sensor 14 detects, as positive values, the acceleration in the longitudinal direction, the clockwise turning in the crosswise direction, and a bound in the vertical direction, and detects, as negative values, a deceleration in the longitudinal direction, the counterclockwise turning in the crosswise direction, and a rebound in the vertical direction. Moreover, in a case of the angular velocity, the 6-axis motion sensor 14 vibrates vibrators composed, for example, of crystal tuning forks by an alternating current voltage, converts amounts of distortion of the vibrators, which are generated by the Coriolis force when the angular velocity is inputted, into electrical signals, and outputs the electrical signals to the controller 21. The controller 21 determines such angular velocities (ωx, ωy, ωz) from the electrical signals inputted thereto. Note that the 6-axis motion sensor 14 detects, as positive values, the clockwise turning about a longitudinal axis (roll axis), the acceleration about a crosswise axis (pitch axis), and the clockwise turning about a vertical axis (yaw axis), and detects, as negative values, the counterclockwise turning about the longitudinal axis (roll axis), the deceleration about the crosswise axis (pitch axis), and the counterclockwise turning about the vertical axis (yaw axis).

The accelerator sensor 15 detects a pedal opening degree PPO (operation position) corresponding to a stepping amount of an accelerator pedal. For example, this accelerator sensor 15 is a potentiometer, converts the pedal opening degree PPO of the accelerator pedal into a voltage signal, and outputs the voltage signal to the controller 21. The controller 21 determines the pedal opening degree PPO of the accelerator pedal from the voltage signal inputted thereto. Note that the pedal opening degree PPO becomes 0% when the accelerator pedal is at a non-operation position, and that the pedal opening degree PPO becomes 100% when the accelerator pedal is at a maximum operation position (stroke end).

The vacuum servo pressure sensor 16 detects a pressure in a vacuum servo (brake booster), that is, brake pedal stepping force Pb. This vacuum servo pressure sensor 16 receives the pressure in the vacuum servo by a diaphragm portion, detects distortion, which is generated in a piezoresistance element through this diaphragm portion, as a change of electrical resistance, converts the change of the electrical resistance into a voltage signal proportional to the pressure, and outputs the voltage signal to the controller 21. The controller 21 determines the pressure in the vacuum servo, that is, the brake pedal stepping force Pb from the voltage signal inputted thereto.

The navigation system 17 recognizes a current position of a vehicle on which the vehicle acoustic control device is mounted and road map information at the current position. This navigation system 17 has a GPS receiver, and recognizes the position (latitude, longitude, altitude) and the travel direction of the vehicle based on time differences between radio waves arriving from four or more GPS satellites. Then, the navigation system 17 refers to road map information including a road type, a road alignment, a lane width, a vehicle passing direction and the like, which are stored in the DVD-ROM drive and the hard disk drive, recognizes the road map information at the current position of the vehicle, and outputs the road map information to the controller 21. Note that the navigation system 17 may receive a variety of data from an infrastructure by using DSRC (Dedicated Short Range Communication) as DSSS (Driving Safety Support Systems).

The suspension stroke sensor 18 detects suspension strokes in the respective wheels. For example, this suspension stroke sensor 18 is composed of a potentiometer, converts rotation angles of suspension links into voltage signals, and outputs the voltage signals to the controller 21. Specifically, the suspension stroke sensor 18 outputs a standard voltage at a non-stroke time in which the vehicle is in a stationary state, outputs voltages smaller than the standard voltage at a bound-stroke time, and outputs the voltage larger than the standard voltage at a rebound-stroke time. The controller 21 determines the suspension strokes in the respective wheels from the voltage signals inputted thereto.

The controller (ECU) 21 is composed, for example, of a microcomputer, executes acoustic control processing based on detection signals from the respective sensors, and drives speakers 23LFL to 23LRR and 23UFL to 23URR through an amplifier (AMP) 22. Note that, in a case where it is not necessary to distinguish the respective speakers, the speakers are described while being denoted by "23" as reference numeral.

The amplifier 22 amplifies the sound signal inputted thereto through the controller 21, then outputs the sound signal to the speakers 23, and moreover, individually adjusts volumes of a treble range, a midrange and a bass range, and adjusts a volume of the stereophonic reproduction for each of channels.

Each of the speakers 23 converts the electrical signal, which is inputted thereto through the amplifier 22, into a physical signal, and outputs the sound. The respective speakers 23 are provided in a vehicle cabin, and for example, are composed of dynamic speakers. That is to say, the electrical signal is inputted to a coil connected directly to a diaphragm, and each of the speakers 23 vibrates the diaphragm by vibration of the coil, which is caused by electromagnetic induction, whereby radiating a sound corresponding to the electrical signal. Each of the speakers 23 may be formed as not only a full-range speaker for the entire bandwidth but also a multi-range speaker composed of a multi-way speaker such as a woofer for the bass range, a squawker for the midrange, and a tweeter for the treble range.

Three English letters assigned to the reference numeral of each of the speakers 23 indicate an attachment position thereof in the vehicle cabin: a first letter indicates a vertical position in the vehicle cabin; a second English letter indicates a longitudinal position in the vehicle cabin; and a third English letter indicates a crosswise position in the vehicle cabin. That is to say, "L" as the first English letter indicates a lower side in the vehicle cabin, and "U" as the first English letter indicates an upper side in the vehicle cabin. Moreover, "F" as the second English letter indicates a front side in the vehicle cabin, and "R" as the second English letter indicates a rear side in the vehicle cabin. Furthermore, "L" as the third English letter indicates a left side in the vehicle cabin, and "R" as the third English letter indicates a right side in the vehicle cabin.

Hence, among the respective speakers 23, "LFL" is located on the lower side/front side/left side in the vehicle cabin, "LFR" is located on the lower side/front side/right side in the vehicle cabin, "LRL" is located on the lower side/rear side/left side in the vehicle cabin, and "LRR" is located on the lower side/rear side/right side in the vehicle cabin. Moreover, "UFL" is located on the upper side/front side/left side in the vehicle cabin, "UFR" is located on the upper side/front side/right side in the vehicle cabin, "URL" is located on the upper side/rear side/left side in the vehicle cabin, and "URR" is located on the upper side/rear side/right side in the vehicle cabin. Note that, preferably, the lower side/upper side, the front side/rear side and the left side/right side individually take, as a reference, a listening point of a driver, and specifically, a head portion (ear points) of the driver.

The configuration of the vehicle acoustic control device is described as above.

Next, a description is made of the acoustic control processing, which is to be executed by the controller 21, based on a block diagram.

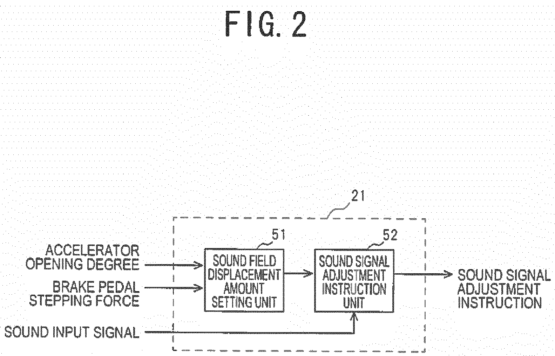

FIG. 2 is a block diagram illustrating an example of the acoustic control processing in the first embodiment.

In the acoustic control processing, a sound field displacement amount setting unit 51 and a sound signal adjustment instruction unit 52 are provided.

When an operation input for changing an acceleration/deceleration behavior of the vehicle is made, the sound field displacement amount setting unit 51 sets a sound field displacement amount β to displace the sound field in the vehicle cabin in a direction of the change in an actual acceleration/deceleration behavior of the vehicle. The operation input is a change in an acceleration/deceleration operation (accelerator operation or brake operation), and is supposed to be an acceleration/deceleration input by the driver herein, without being limited thereto. That is to say, the operation input includes the acceleration/deceleration input by an actuator in accelerator control or brake control such as intervention control for following a preceding vehicle or avoiding contact with an obstacle, automated driving, or the like.

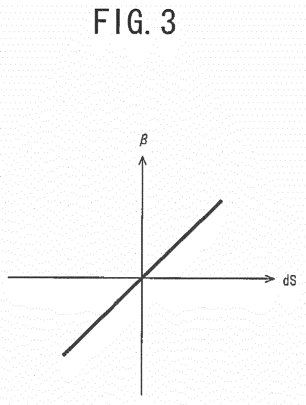

Here, an acceleration/deceleration operation speed dS is calculated on the basis of an accelerator opening degree PPO or the brake pedal stepping force Pb, and the sound field displacement amount β is set depending on the acceleration/deceleration operation speed dS. It is to be noted that the operation speed dS of the accelerator opening degree PPO is indicated by a positive value and that the operation speed dS of the brake pedal stepping force Pb is indicated by a negative value. The acceleration/deceleration operation speed dS is an amount of change of the accelerator opening degree PPO or the brake pedal stepping force Pb per unit time, and is calculated, for example, by a time differential of the accelerator opening degree PPO or the brake pedal stepping force Pb, or by high-pass filter processing of an operation frequency. It is to be noted that a cutoff frequency of the high-pass filter may be approximately 0.3 Hz, for example. As a matter of course, band-pass filter processing may be performed instead of the high-pass filter processing. Then the sound field displacement amount β is set depending on the acceleration/deceleration operation speed dS with reference to maps as illustrated in FIG. 3 to FIG. 5 for example.

FIG. 3 is an example of the map for use in setting the sound field displacement amount β.

In accordance with this map, as the acceleration/deceleration operation speed dS is increasing from zero in a positive direction, the sound field displacement amount P increases from zero in the positive direction, and as the acceleration/deceleration operation speed dS is decreasing from zero in a negative direction, the sound field displacement amount β decreases from zero in the negative direction.

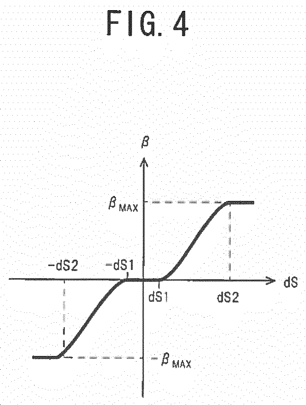

FIG. 4 an example of the map for use in setting the sound field displacement amount β (dead band, limit).

Here, with regard to the acceleration/deceleration operation speed dS, dS1 and dS2, which establish a relationship of 0 < |dS1| < |dS2|, are predetermined, and with regard to the sound field displacement amount β, a maximum displacement amount β_{MAX}, which establishes a relationship of 0 < |β_{MAX}|, is predetermined. It is to be noted that dS1 corresponds to a value within a range which can be regarded as vicinities of zero, and dS2 corresponds to a value within a range which can be regarded to be relatively fast in a usual pedal operation. Furthermore, a positive maximum displacement amount +β_{MAX} is determined depending on a maximum acceleration determined by vehicle specifications, and a negative maximum displacement amount -β_{MAX} is determined depending on a maximum deceleration determined by the vehicle specifications. Then, when an absolute value of the acceleration/deceleration operation speed dS is within a range from zero to |dS1|, the sound field displacement amount β is maintained to be zero. Furthermore, when the absolute value of the acceleration/deceleration operation speed dS is within a range from |dS1| to |dS2|, the sound field displacement amount β is increased within a range from zero to the maximum displacement amount β_{MAX} as the acceleration/deceleration operation speed dS is higher. Furthermore, when the absolute value of the acceleration/deceleration operation speed dS is larger than |dS2|, the sound field displacement amount β is maintained to be the maximum displacement amount β_{MAX}.

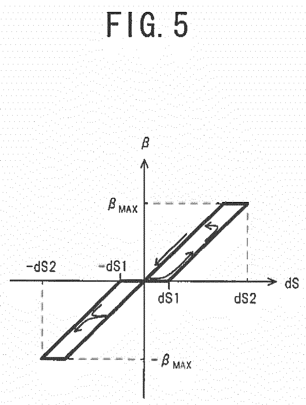

FIG. 5 is an example of the map for use in setting the sound field displacement amount β.

This map can be obtained based on the map of FIG. 4 mentioned above, and by providing a hysteresis therein when the absolute value of the acceleration/deceleration operation speed dS starts to decrease after an increase. That is to say, when the absolute value of the acceleration/deceleration operation speed dS decreases from a state of increasing, the sound field displacement amount β at a time when the absolute value starts to decrease after the increase is maintained. Then, when a decrement of the absolute value of the acceleration/deceleration operation speed dS exceeds a predetermined hysteresis amount (for example, dS1, the sound field displacement amount β decreases. Furthermore, when the absolute value of the acceleration/deceleration operation speed dS starts to decrease after the increase, and then starts to increase again before decreasing to zero, the sound field displacement amount β at a time when the absolute value starts to increase after the decrease is maintained. Then, when an increment of the absolute value of the acceleration/deceleration operation speed dS exceeds the predetermined hysteresis amount (for example, dS1), the sound field displacement amount β is increased.

It is to be noted that though the sound field displacement amount β is set simply depending on the acceleration/deceleration operation speed dS, the setting of the sound field displacement amount β is not limited to this. For example, when the acceleration/deceleration operation input is smaller than a predetermined operation amount or is shorter than a predetermined duration time, the sound field displacement amount β may be set at zero. In such a way, unnecessary control for the sound field is suppressed.

Furthermore, the accelerator opening degree PPO or the brake pedal stepping force Pb may be substituted for the above-described acceleration/deceleration operation speed dS, and the sound field displacement amount β may be set depending on the accelerator opening degree PPO or the brake pedal stepping force Pb.

Furthermore, the brake pedal stepping speed is simply indicated as a negative value of the acceleration/deceleration operation speed dS. However, the negative value of the acceleration/deceleration operation speed dS is not limited thereto. Since the deceleration is also caused by returning the accelerator pedal or downshifting for example, a target deceleration of the vehicle may be comprehensively calculated base on an accelerator operation, a brake operation, and a shift operation, and a change rate of the target deceleration may be indicated as a negative value of the acceleration/deceleration operation speed dS.

The sound field displacement amount β is set as described above.

In order to displace the sound field, in which the sounds are outputted by the respective speakers 23, about the coordinate origin O by β in the direction of the change of the acceleration/deceleration behavior, the sound signal adjustment instruction unit 52 outputs a driving instruction for adjusting the sound signal to the amplifier 22.

Here, a description is made of displacement (translational movement) of the sound field.

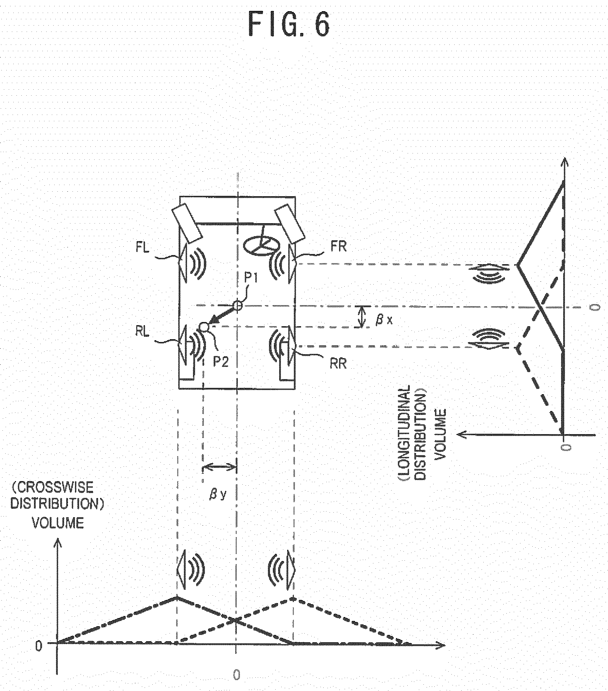

FIG. 6 is a view schematically illustrating the vehicle cabin space when viewed from above.

Here, a description is made of a case where the front left speaker is FL, the front right speaker is FR, the rear left speaker is RL, the rear right speaker is RR, and a center of the sound field where the sounds are outputted from these speakers FL to RR is displaced from a point P1 to a point P2. Here, the point P2 is a position moved from the point P1 to a vehicle body left side by βy in the vehicle width direction, and is a position displaced from the point P1 to a vehicle body rear side by βx in the longitudinal direction.

First, a state where the center of the sound field is located at the point P1 is defined as an initial state. At this time, it is assumed that a volume outputted from the front speakers FL and FR and a volume outputted from the rear speakers RL and RR are equal to each other in a longitudinal distribution, and that a volume outputted from the left speakers FL and RL and a volume outputted from the right speakers FR and RR are equal to each other in a crosswise distribution. In order to displace the center of the sound field from this initial state to the point P2, the longitudinal distribution and crosswise distribution of the volumes are changed.

That is to say, in a case of displacing the center of the sound field to the vehicle body rear side by βx, the volume outputted from the front speakers FL and FR is relatively decreased, and the volume outputted from the rear speakers RL and RR is relatively increased. Here, the volume outputted from the front speakers FL and FR is shown by a solid line, and the volume outputted from the rear speakers RL and RR is shown by a broken line. At this time, a decrement on the front side and an increment on the rear side may be equal to each other or may be different from each other.

Moreover, in a case of displacing the center of the sound field to the vehicle body left side by βy, the volume outputted from the left speakers FL and RL is relatively increased, and the volume outputted from the right speakers FR and RR is relatively decreased. Here, the volume outputted from the left speakers FL and RL is shown by a dashed-dotted line, and the volume outputted from the right speakers FR and RR is shown by a dotted line. At this time, an increment on the left side and a decrement on the right side may be equal to each other or may be different from each other. In such a way, the driving instruction for adjusting the sound signal is generated and outputted.

The acoustic control processing is described as above based on the block diagram.

Next, a description is made of the acoustic control processing, which is to be executed by the controller 21, based on a flowchart.

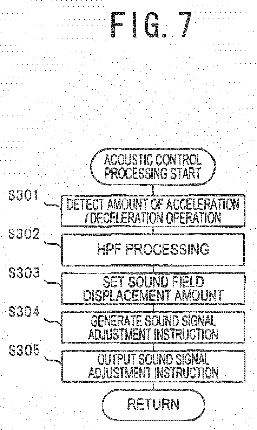

FIG. 7 is a flowchart illustrating an example of the acoustic control, processing in the first embodiment.

First, in step S301, the acceleration/deceleration operation amount (the accelerator opening degree PPO and the brake pedal stepping force Pb) is detected.

In subsequent step S302, a value corresponding to the acceleration/deceleration operation speed dS is calculated, for example, by performing the high-pass filter processing on the pedal operation frequency. The cutoff frequency of the high-pass filter processing is, for example, approximately 0.3 Hz. In this processing, a stationary component of the acceleration/deceleration operation input just needs to be removable, and the operation input for changing the acceleration/deceleration behavior of the vehicle just needs to be extractable.

In subsequent step S303, the sound field displacement amount β is set depending on the acceleration/deceleration operation speed dS.

In subsequent step S304, in order to displace the center of the sound field, in which the sounds are outputted by the respective speakers 23, by β in the longitudinal direction of the vehicle body, the driving instruction for adjusting the sound signal is generated.

In subsequent step S305, the driving instruction for adjusting the sound signal is outputted to the amplifier 22, and the acoustic control processing returns to a predetermined main program.

The acoustic control processing is described as above based on the flowchart.

### (Functions)

Next, a description is made of functions of the first embodiment.

In the present embodiment, the plurality of speakers 23 are disposed in the front and the rear of a passenger when viewed from above, and a sound is reproduced by the plurality of speakers 23. Then, when the acceleration/deceleration operation input for changing the acceleration/deceleration behavior of the vehicle is made, the sound field in the vehicle cabin is displaced in the direction (acceleration/deceleration direction) of the change in the actual acceleration/deceleration behavior of the vehicle, as feedforward control. Specifically, the longitudinal distribution between the volume outputted from the front speakers and the volume outputted from the rear speakers is changed, whereby the center of the sound field is displaced.

In general, when a tree grows slantingly, a person tends to be given the illusion that the road is inclined, and it is known that a person recognizes an attitude change of his/her own also by a sound. Accordingly, when the sound field in the vehicle cabin is displaced in the direction of the change in the actual acceleration/deceleration behavior of the vehicle, the change in the acceleration/deceleration behavior depending on the acceleration/deceleration operation input can be rendered. Therefore, since the driver imagines the change in the acceleration/deceleration behavior on the basis of his/her acceleration/deceleration operation input and the imagined acceleration/deceleration behavior matches the motion of the sound field, the operation feeling is improved.

Furthermore, there is some amount of response difference from when the acceleration/deceleration operation input is made till when the operation input is reflected in an actual vehicle behavior. By rendering the change in the acceleration/deceleration behavior depending on the acceleration/deceleration operation input before the change of the actual acceleration/deceleration behavior of the vehicle, a feeling (impression) that the responsiveness of the acceleration/deceleration behavior to the acceleration/deceleration operation input is improved can be given to the passenger (especially to the driver). It is to be noted that as silence of the vehicle cabin space is higher, such an acoustic effect as described above is considered to be high, and accordingly, the first embodiment is suitable for a time when a hybrid vehicle runs by a motor (EV mode), an electric vehicle and the like.

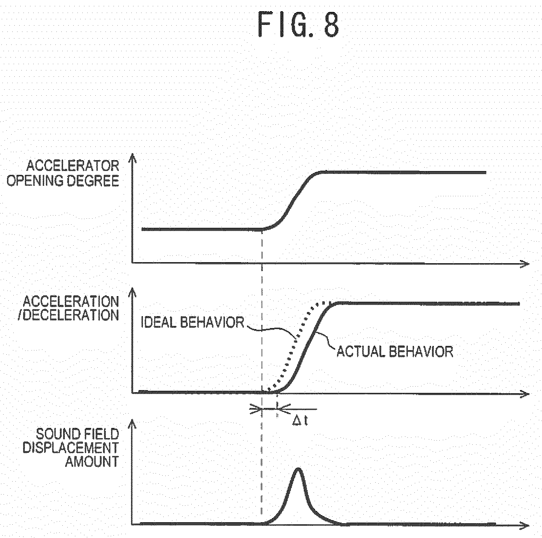

FIG. 8 is a time chart explaining the response difference in the actual vehicle behavior.

Here, a description is made of a case where the accelerator pedal is stepped to accelerate the vehicle in a state the vehicle travels at almost a constant speed.

When an acceleration/deceleration is increased in an acceleration direction (positive direction) at the almost same time when the accelerator pedal is stepped to increase the accelerator opening degree PPO, an ideal behavior in which the response difference Δt is about zero is achieved. However, the actual vehicle behavior has some amount of response difference Δt relative to the increase of the accelerator opening degree PPO. Thus, by increasing the sound field displacement amount β from when the accelerator opening degree PPO starts to increase to render the change in the acceleration/deceleration behavior depending on the acceleration/deceleration operation input, a feeling that the responsiveness of the acceleration/deceleration behavior is improved can be given to the passenger.

The sound field displacement amount β is set depending on the acceleration/deceleration operation speed dS, and the sound field displacement amount β is set larger as the acceleration/deceleration operation speed dS is faster. This is because the response difference from when the acceleration/deceleration operation input is made till when the operation input is reflected in the actual vehicle behavior is larger (more conspicuous), as the acceleration/deceleration operation speed dS is faster, and the response difference from when the acceleration/deceleration operation input is made till when the operation input is reflected in the actual vehicle behavior is smaller (more inconspicuous) as the acceleration/deceleration operation speed dS is slower. Therefore, by setting the sound field displacement amount β larger as the acceleration/deceleration operation speed dS is faster, the change in the acceleration/deceleration behavior depending on the acceleration/deceleration operation input can be effectively rendered.

Furthermore, when a certain accelerator opening degree PPO is kept by the accelerator operation, the acceleration/deceleration operation speed dS is about zero, and thus the sound field displacement amount β is also about zero. Therefore, after the acceleration/deceleration operation input is made, by the time when the actual acceleration/deceleration behavior of the vehicle starts to change, the sound field returns to a state before the sound field in the vehicle cabin is displaced, that is, an usual initial state. That is to say, by the time when the actual acceleration/deceleration behavior catches up to the acceleration/deceleration operation input, the rendering of the acceleration/deceleration behavior by the displacement of the sound field is terminated. This is because when the state in which the sound field in the vehicle cabin keeps on being displaced continues although the actual acceleration/deceleration behavior catches up to the acceleration/deceleration operation input, such an unnatural rendering may give an uncomfortable feeling to the driver.

Furthermore, when the acceleration/deceleration operation input is smaller than a predetermined operation amount or is shorter than a predetermined duration time, the sound field displacement amount β may be set at zero. In such a way, a situation where the control for the sound field is performed unnecessarily to give an uncomfortable feeling to the driver can be suppressed.

Furthermore, since the sound field displacement amount β is limited by the maximum displacement amount β_{MAX} as an upper limit, the sound field displacement amount β can be suppressed from being too large unnecessarily. Furthermore, since the maximum displacement amount β_{MAX} is determined depending on the maximum acceleration and the maximum deceleration specific to each vehicle, the acceleration/deceleration behavior suitable to the vehicle can be rendered.

Next, a description is made of recognition timing of the behavior change.

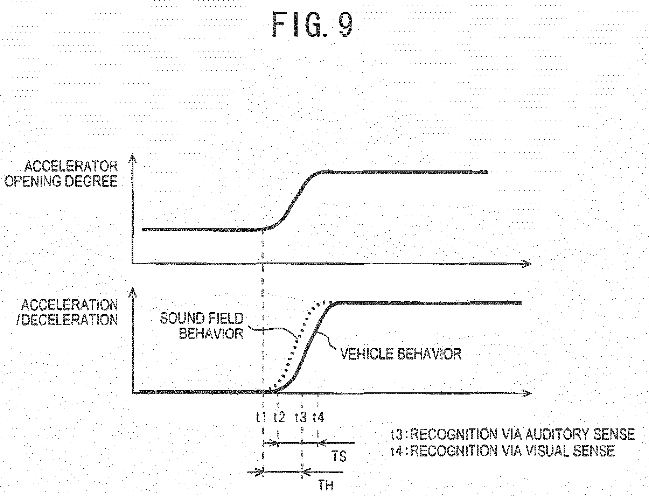

FIG. 9 is a time chart explaining the recognition timing of the behavior change.

Also here, a description is made of a case where the accelerator pedal is stepped to accelerate the vehicle in a state the vehicle travels at almost a constant speed.

At time t1, the accelerator pedal is stepped to increase the accelerator opening degree PPO. There is some amount of response difference from when the acceleration/deceleration operation input is made till when this operation input is reflected in the actual acceleration/deceleration behavior. That is to say, at time t2 after time t1, the vehicle starts to accelerate in response to the accelerator operation. In the present embodiment, by displacing the sound field in the vehicle cabin in the direction of the change in the actual acceleration/deceleration behavior at time t1 when the acceleration/deceleration operation input is made, the change in the acceleration/deceleration behavior depending on the acceleration/deceleration operation input can be rendered.

Here, comparison is made between a timing of recognizing the change in the sound field behavior via an auditory sense and a timing of recognizing the change in the vehicle behavior via a visual sense.

Time t3 after the lapse of a simple reaction time TH of the auditory sense from time t1 when the sound field behavior starts to change is the timing of recognizing the change in the sound field behavior via the auditory sense. Furthermore, time 4 after the lapse of a simple reaction time TS of the visual sense from time t2 when the vehicle behavior starts to change is the timing of recognizing the change in the vehicle behavior via the visual sense. In general, the simple reaction time TH of the auditory sense is about 140 to 160 msec, and the simple reaction time TS of the visual sense is about 180 to 200 msec. Therefore, since the change timing of the sound field behavior is earlier than the change timing of the vehicle behavior and the simple reaction time of the auditory sense is shorter than the simple reaction time of the visual sense, a feeling that the responsiveness of the acceleration/deceleration behavior to the acceleration/deceleration operation input is improved can be effectively given to the passenger.

### (Applications)

In the present embodiment, the sound field in the vehicle cabin is controlled by adjusting a primary sound based on the sound signal from the acoustic equipment 11, however, the control of the sound field is not limited thereto. For example, it may be assumed that there are virtual walls surrounding a periphery of the vehicle when viewed from above, whereby a reverberating sound of the primary sound from the virtual walls may be assumed and generated, and the reverberating sound may be outputted by the respective speakers 23 as a secondary sound. Then, when the acceleration/deceleration operation input is made, the virtual walls may be displaced in the direction of the change in the actual acceleration/deceleration behavior.

FIGs . 10A and 10B are views explaining the virtual walls.

Here, a ripple (dotted lines) expanding radially from a center of the vehicle cabin space indicates the primary sound based on the sound signal from the acoustic equipment 11. Furthermore, the square (double solid line) surrounding the periphery of the vehicle when viewed from above indicates virtual walls 33. Furthermore, the ripples (dashed-dotted line) moving from respective sides of the virtual walls 33 toward the center of the vehicle cabin space indicate reverberating sounds of the primary sound from the virtual walls 33.

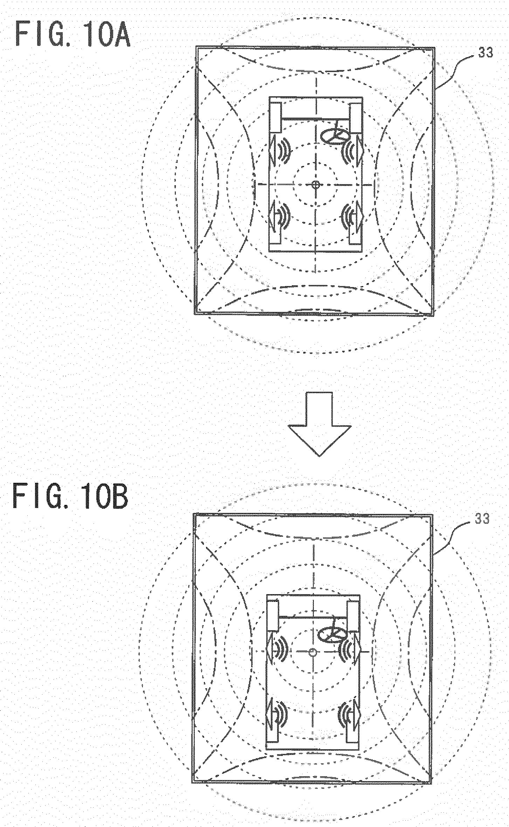

FIG. 10A illustrates a state in which the acceleration/deceleration operation input for accelerating the vehicle is not made, and FIG. 10B illustrate a state after the acceleration/deceleration operation input for accelerating the vehicle is made from the state illustrated in FIG. 10A.

As well as the primary sound is outputted by the respective speakers 23, the reverberating sounds of the primary sound from the virtual walls 33 is generated by assuming that there are the virtual walls 33 surrounding the periphery of the vehicle. By outputting the reverberating sounds by the respective speakers 23 as the secondary sounds, an acoustic effect like listening in a hall, a church, or the like can be reproduced in a simulative manner. Therefore, not only by simply displacing the sound field by the primary sound but also by displacing the virtual walls 33 to displace the secondary sounds, the displacement of the sound field can be rendered in a more realistic manner to obtain an acoustic effect giving the sense of reality.

As described above, the speakers 23LFL to 23LRR and 23UFL to 23URR correspond to the "plurality of speakers", and the acoustic control processing to be executed by the controller 21 corresponds to the "sound field control unit". (Effects)

Next, a description is made of effects of main portions in the first embodiment.
(1) The vehicle acoustic control device of the present embodiment includes: the plurality of speakers 23 disposed in the front and the rear of the passenger; and the controller 21 that controls the sound field in the vehicle cabin by individually driving the plurality of speakers 23. The controller 21 is configured to, when the operation input for changing the acceleration/deceleration behavior of the vehicle is made, displace the sound field in the vehicle cabin in the direction of the change in the actual acceleration/deceleration behavior of the vehicle depending on the operation input.
   As described above, by displacing the sound field in the vehicle cabin in the direction of the change in the actual acceleration/deceleration behavior of the vehicle, the change in the acceleration/deceleration behavior depending on the operation input can be rendered before the change of the acceleration/deceleration behavior of the vehicle. Therefore, the matching between the imagined vehicle behavior and the motion of the sound field in the vehicle cabin can be improved.
(2) In the vehicle acoustic control device of the present embodiment, the controller 21 is configured to set the sound field displacement amount β larger as the acceleration/deceleration operation speed dS for changing the acceleration/deceleration behavior of the vehicle is faster.
   As described above, by setting the sound field displacement amount β larger as the acceleration/deceleration operation speed dS is faster, the change in the acceleration/deceleration behavior depending on the acceleration/deceleration operation input can be effectively rendered.
(3) In the vehicle acoustic control device of the present embodiment, the maximum displacement amount β_{MAX} in displacing the sound field in the acceleration direction is determined depending on the maximum acceleration determined for each vehicle, and the maximum displacement amount β_{MAX} in displacing the sound field in the deceleration direction is determined depending on the maximum deceleration determined for each vehicle.
   As described above, by determining the maximum displacement amount β_{MAX} of the sound filed depending on the maximum acceleration and the maximum deceleration determined for each vehicle, the acceleration/deceleration behavior suitable to the vehicle can be rendered.
(4) In the vehicle acoustic control device of the present embodiment, the controller 21 is configured to change the longitudinal distribution between the volume outputted from the front speaker and the volume outputted from the rear speaker so as to displace the sound field.
   As described above, by changing the longitudinal distribution of the volume to displace the sound field, the control for the sound field can be performed easily.
(5) In the vehicle acoustic control device of the present embodiment, the controller 21 is configured to output the primary sound by the plurality of speakers 23, to assume and generate the reverberating sound of the primary sound from the virtual wall 33 by assuming that there are the virtual wall 33 surrounding the periphery of the vehicle when viewed from above, and to output the reverberating sound by the plurality of speakers 23, as the secondary sound. Then, the controller 21 is configured to, when the operation input for changing the acceleration/deceleration behavior of the vehicle is made, displace the virtual wall 33 in the direction of the change in the actual acceleration/deceleration behavior of the vehicle depending on the operation input.
   As described above, by displacing the virtual wall 33 in the direction of the change in the acceleration/deceleration behavior, the displacement of the sound field can be rendered in a more realistic manner to obtain an acoustic effect giving the sense of reality.
(6) In the vehicle acoustic control method of the present embodiment, the plurality of speakers 23 disposed in the front and the rear of the passenger are individually driven, whereby the sound field in the vehicle cabin is controlled. Then, when the operation input for changing the acceleration/deceleration behavior of the vehicle is made, the sound field in the vehicle cabin is displaced depending on the operation input before the change in the actual acceleration/deceleration behavior of the vehicle so as to render the change in the vehicle behavior depending on the operation input.

As described above, since the sound field in the vehicle cabin is displaced depending on the operation input before the change in the actual acceleration/deceleration behavior of the vehicle so as to render the change in the vehicle behavior depending on the operation input, the matching between the imagined vehicle behavior and the motion of the sound field in the vehicle cabin can be improved.

### (Second Embodiment)

### (Configuration)

In the present embodiment, when the operation input for changing the acceleration/deceleration behavior of the vehicle is made, the sound field of the vehicle cabin is displaced in the direction of the change in the actual acceleration/deceleration behavior depending on a deviation between a normative acceleration/deceleration behavior and the actual acceleration/deceleration behavior. That is to say, the change of the acceleration/deceleration behavior depending on the operation input is rendered before the change in the actual acceleration/deceleration behavior.

The configuration of the device is the same to that of the first embodiment mentioned above.

Next, a description is made of the acoustic control processing, which is to be executed by the controller 21, based on a block diagram.

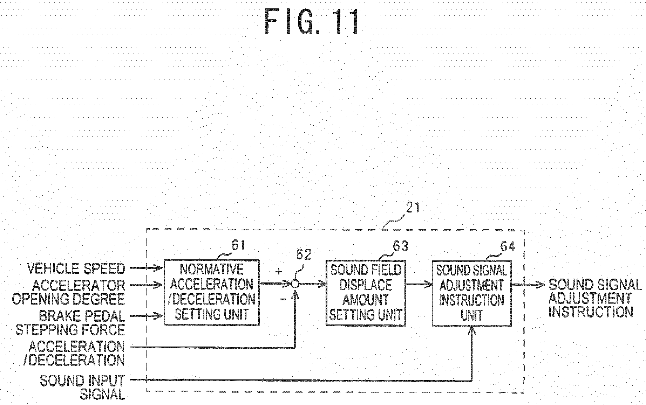

FIG. 11 is a block diagram illustrating an example of the acoustic control processing in the second embodiment.

In the acoustic control processing, a normative acceleration/deceleration setting unit 61, a deviation computing unit 62, a sound field displacement amount setting unit 63, and a sound signal adjustment instruction unit 64 are provided.

The normative acceleration/deceleration setting unit 61 sets a normative acceleration/deceleration GxT depending on a vehicle speed V, the accelerator opening degree PPO, and the brake pedal stepping force Pb.

The deviation computing unit 62 computes a deviation ΔG of the acceleration/deceleration Gx (hereinafter, referred to as an "actual acceleration/deceleration GxR") relative to the normative acceleration/deceleration GxT by subtracting the actual acceleration/deceleration GxR from the normative acceleration/deceleration GxT. Therefore, the actual acceleration/deceleration GxR (a positive value) lower than the normative acceleration/deceleration GxT (a positive value) means that the deviation ΔG has a positive value and the acceleration/deceleration behavior changes in the acceleration direction. The actual acceleration/deceleration GxR (a positive value) higher than the normative acceleration/deceleration GxT (a positive value) means that the deviation ΔG has a negative value and the acceleration/deceleration behavior changes in the deceleration direction.

When the operation input for changing the acceleration/deceleration behavior of the vehicle is made, the sound field displacement amount setting unit 63 sets the sound field displacement amount β to displace the sound field in the vehicle cabin in the direction of the change in the actual acceleration/deceleration behavior of the vehicle depending on the deviation ΔG. The operation input is a change in an acceleration/deceleration operation (accelerator operation or brake operation), and is supposed to be an acceleration/deceleration input by the driver herein, without being limited thereto. That is to say, the operation input includes the acceleration/deceleration input by an actuator in accelerator control or brake control such as intervention control for following a preceding vehicle or avoiding contact with an obstacle, automated driving, or the like.

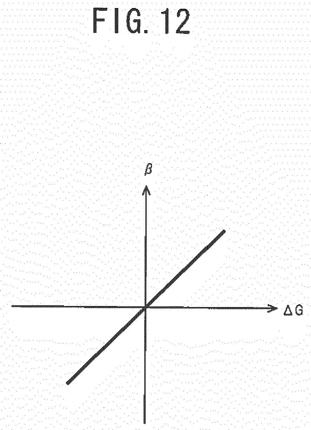

FIG. 12 is an example of the map for use in setting the sound field displacement amount β.

In accordance with this map, as the deviation ΔG is increasing from zero in a positive direction, the sound field displacement amount β increases from zero in the positive direction, and as the deviation ΔG is decreasing from zero in a negative direction, the sound field displacement amount β decreases from zero in the negative direction.

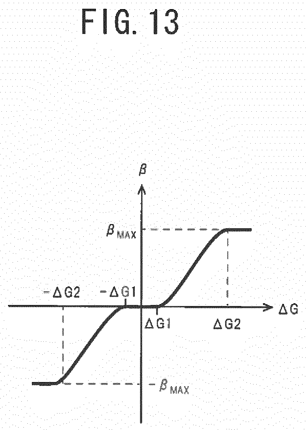

FIG. 13 is an example of the map for use in setting the sound field displacement amount β (dead band, limit).

Here, with regard to the deviation ΔG, ΔG1 and ΔG2, which establish a relationship of 0 < |ΔG1| < |ΔG2|, are predetermined, and with regard to the sound field displacement amount β, a maximum displacement amount β_{MAX}, which establishes a relationship of 0 < |β_{MAX}|, is predetermined. It is to be noted that ΔG1 corresponds to a value within a range which can be regarded as vicinities of zero, and ΔG2 corresponds to a value within a range which can be regarded to be relatively fast in a usual pedal operation. Furthermore, a positive maximum displacement amount +β_{MAX} is determined depending on a maximum acceleration determined by vehicle specifications, and a negative maximum displacement amount -β_{MAX} is determined depending on a maximum deceleration determined by the vehicle specifications. Then, when an absolute value of the deviation ΔG is within a range from zero to |ΔG1|, the sound field displacement amount β is maintained to be zero. Furthermore, when the absolute value of the deviation ΔG is within a range from |ΔG1| to |ΔG2|, the sound field displacement amount β is increased within a range from zero to the maximum displacement amount β_{MAX} as the deviation ΔG is faster. Furthermore, when the absolute value of the deviation ΔG is larger than |ΔG2|, the sound field displacement amount β is maintained to be the maximum displacement amount β_{MAX}.

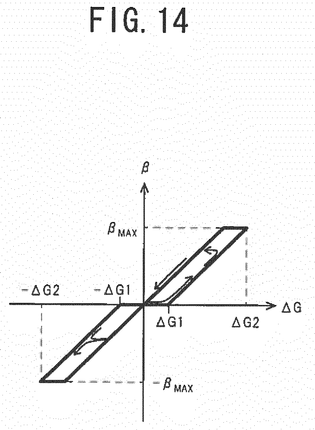

FIG. 14 is an example of the map for use in setting the sound field displacement amount β (hysteresis).

This map can be obtained based on the map of FIG. 13 mentioned above, and by providing a hysteresis therein when the absolute value of the deviation ΔG starts to decrease after an increase. That is to say, when the absolute value of the deviation ΔG decreases from a state of increasing, the sound field displacement amount β at a time when the absolute value starts to decrease after the increase is maintained. Then, when a decrement of the absolute value of the deviation ΔG exceeds a predetermined hysteresis amount (for example, ΔG1), the sound field displacement amount β decreases. Furthermore, when the absolute value of the deviation ΔG starts to decrease after the increase, and then starts to increase again before decreasing to zero, the sound field displacement amount β at a time when the absolute value starts to increase after the decrease is maintained. Then, when an increment of the absolute value of the deviation ΔG exceeds the predetermined hysteresis amount (for example, ΔG1), the sound field displacement amount β is increased.

It is to be noted that though the sound field displacement amount β is set simply depending on the deviation ΔG, the setting of the sound field displacement amount β is not limited to this. For example, when the acceleration/deceleration operation input is smaller than the predetermined operation amount or is shorter than the predetermined duration time, the sound field displacement amount β may be set at zero. In such a way, unnecessary control for the sound field is suppressed.

Furthermore, a normative vehicle position XT on a map coordinate for example, may be set by integrating the normative acceleration/deceleration GxT, and the actual vehicle position XR may be detected. A deviation ΔX of the actual vehicle position XR relative to the normative vehicle position XT may be calculated to set the sound field displacement amount β depending on the deviation ΔX instead of the deviation ΔG mentioned above.

Furthermore, the deviations ΔG and ΔX may be corrected by multiplying the respective deviations by a gain depending on the acceleration/deceleration operation amount or the acceleration/deceleration operation speed.

The sound field displacement amount β is set as described above.

In order to displace the sound field, in which the sounds are outputted by the respective speakers 23, about the coordinate origin O by β in the direction of the change in the acceleration/deceleration behavior, the sound signal adjustment instruction unit 52 outputs a driving instruction for adjusting the sound signal to the amplifier 22.

The acoustic control processing is described as above based on the block diagram.

Next, a description is made of the acoustic control processing, which is to be executed by the controller 21, based on a flowchart.

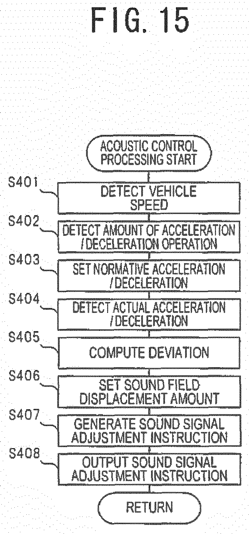

FIG. 15 is a flowchart illustrating an example of the acoustic control processing in the second embodiment.

First, in step S401, the vehicle speed V is detected.

In subsequent step S402, the acceleration/deceleration operation amount (the accelerator opening degree PPO and the brake pedal stepping force Pb) is detected.

In subsequent step S403, the normative acceleration/deceleration GxT is set depending on the vehicle speed V and the acceleration/deceleration operation amount.

In subsequent step S404, the actual acceleration/deceleration GxR is detected.

In subsequent step S405, the deviation ΔG (=VT-VR) of the actual acceleration/deceleration GxR relative to the normative acceleration/deceleration GxT.

In subsequent step S406, the sound field displacement amount P is set depending on the deviation ΔG.

In subsequent step S407, in order to displace the center of the sound field, in which the sounds are outputted by the respective speakers 23, by β in the longitudinal direction of the vehicle body, the driving instruction for adjusting the sound signal is generated.

In subsequent step S408, the driving instruction for adjusting the sound signal is outputted to the amplifier 22, and the acoustic control processing returns to a predetermined main program.

The acoustic control processing is described as above based on the flowchart.

### (Functions)

Next, a description is made of functions of the second embodiment.

In the present embodiment, the plurality of speakers 23 are disposed in the front and the rear of the passenger when viewed from above, and a sound is reproduced by the plurality of speakers 23. Then, when the acceleration/deceleration operation input for changing the acceleration/deceleration behavior of the vehicle is made, the deviation ΔG of the actual acceleration/deceleration GxR relative to the normative acceleration/deceleration GxT is computed and the sound field in the vehicle cabin is displaced depending on the deviation ΔG in the direction (acceleration/deceleration direction) of the change in the actual acceleration/deceleration behavior of the vehicle, as feedforward control. Specifically, the longitudinal distribution between the volume outputted from the front speakers and the volume outputted from the rear speakers is changed, whereby the center of the sound field is displaced.

In general, when a tree grows slantingly, a person tends to be given the illusion that the road is inclined, and it is known that a person recognizes an attitude change of his/her own also by a sound. Accordingly, when the sound field in the vehicle cabin is displaced depending on the deviation ΔG in the direction of the change in the actual acceleration/deceleration behavior of the vehicle, the change in the acceleration/deceleration behavior depending on the acceleration/deceleration operation input can be rendered. Therefore, since the driver imagines the change in the acceleration/deceleration behavior on the basis of his/her acceleration/deceleration operation input and the imagined acceleration/deceleration behavior matches the motion of the sound field, the operation feeling is improved.

In this situation, there is some amount of response difference from when the acceleration/deceleration operation input is made till when the operation input is reflected in the actual vehicle behavior. By rendering the change in the acceleration/deceleration behavior depending on the acceleration/deceleration operation input before the change of the actual acceleration/deceleration behavior of the vehicle, a feeling (impression) that the responsiveness of the acceleration/deceleration behavior to the acceleration/deceleration operation input is improved can be given to the passenger (especially to the driver). It is to be noted that as silence of the vehicle cabin space is higher, such an acoustic effect as described above is cinsidered to be high, and accordingly, the second embodiment is suitable for a time when a hybrid vehicle runs by a motor (EV mode), an electric vehicle and the like.

Here, a description is made of a case where the accelerator pedal is stepped to accelerate the vehicle in a state where the vehicle travels at almost a constant speed.

When an acceleration/deceleration is increased in an acceleration direction at the almost same time when the accelerator pedal is stepped to increase the accelerator opening degree PPO, an ideal behavior (almost the normative acceleration/deceleration GxT) in which the response difference Δt is about zero is achieved. However, the actual vehicle behavior has some amount of response difference Δt relative to the increase of the accelerator opening degree PPO. Thus, by increasing the sound field displacement amount β from when the accelerator opening degree PPO starts to increase to render the change in the acceleration/deceleration behavior depending on the acceleration/deceleration operation input, a feeling that the responsiveness of the acceleration/deceleration behavior is improved can be given to the passenger.

The sound field displacement amount β is set depending on the deviation ΔG, and the sound field displacement amount P is set larger as the deviation ΔG is larger. As described above, by setting the sound field displacement amount β larger as the deviation ΔG is larger, the change in the acceleration/deceleration behavior depending on the acceleration/deceleration operation input can be effectively rendered. Furthermore, as the deviation ΔG becomes smaller while the actual acceleration/deceleration GxR gradually catches up the normative acceleration/deceleration GxT, the sound field displacement amount β becomes smaller. Then, when the deviation ΔG is eliminated, the sound field displacement amount β becomes zero. As described above, by the time when the actual acceleration/deceleration behavior of the vehicle starts to change and the response difference is eliminated, the sound field returns to a state before the sound field in the vehicle cabin is displaced, that is, the usual initial state. That is to say, by the time when the actual acceleration/deceleration behavior catches up to the acceleration/deceleration operation input, the rendering of the acceleration/deceleration behavior by the displacement of the sound field is terminated. This is because when the state in which the sound field in the vehicle cabin keeps on being displaced continues although the actual acceleration/deceleration behavior catches up to the acceleration/deceleration operation input, such an unnatural rendering may give an uncomfortable feeling to the driver.

Furthermore, when the acceleration/deceleration operation input is smaller than a predetermined operation amount or is shorter than a predetermined duration time, the sound field displacement amount β may be set at zero. In such a way, a situation where the control for the sound field is performed unnecessarily to give an uncomfortable feeling to the driver can be suppressed,.

Furthermore, since the sound field displacement amount β is limited by the maximum displacement amount β_{MAX} as an upper limit, the sound field displacement amount β can be suppressed from being too large unnecessarily. Furthermore, since the maximum displacement amount β_{MAX} is determined depending on the maximum acceleration or the maximum deceleration specific to each vehicle, the acceleration/deceleration behavior suitable to the vehicle can be rendered.

### (Applications)

In the present embodiment, the sound field in the vehicle cabin is changed in the direction of the change in the actual acceleration/deceleration behavior of the vehicle depending on the deviation ΔG of the actual acceleration/deceleration GxR relative to the normative acceleration/deceleration GxT, however, the control of the sound field is not limited thereto. For example, the present embodiment may be adopted to be combined with the first embodiment. That is to say, when the operation input for changing the acceleration/deceleration behavior of the vehicle is made, the displacement amount β of the sound field may be set larger as the acceleration/deceleration operation speed dS is higher and the deviation ΔG is larger. For example, an average value of the displacement amount β which is set depending on the acceleration/deceleration operation speed dS and the displacement amount β which is set depending on the deviation ΔG, a sum of these displacement amounts after being weighted, or the like may be set as a final displacement amount β.

As described above, the speakers 23LFL to 23LRR and 23UFL to 23URR correspond to the "plurality of speakers", and the acoustic control processing to be executed by the controller 21 corresponds to the "sound field control unit". Furthermore, the normative acceleration/deceleration setting unit 61 corresponds to the "normative behavior setting unit" and the 6-axis motion sensor 14 corresponds to the "actual behavior detection unit".

### (Effects)

Next, a description is made of effects of main portions in the second embodiment.
(1) The vehicle acoustic control device of the present embodiment includes: the plurality of speakers 23 disposed in the front and the rear of the passenger; and the controller 21 that controls the sound field in the vehicle cabin by individually driving the plurality of speakers 23. The controller 21 is configured, when the operation input for changing the acceleration/deceleration behavior of the vehicle is made, to set the normative acceleration/deceleration GxT, to detect the actual acceleration/deceleration GxR, and to displace the sound field in the vehicle cabin in the direction of the change in the actual acceleration/deceleration behavior of the vehicle depending on the deviation ΔG of the actual acceleration/deceleration GxR relative to the normative acceleration/deceleration GxT.
   As described above, by displacing the sound field in the vehicle cabin in the direction of the change in the actual acceleration/deceleration behavior of the vehicle depending on the deviation ΔG between the normative acceleration/deceleration GxT and the actual acceleration/deceleration GxR, the change of the acceleration/deceleration behavior depending on the operation input can be rendered before the change in the actual acceleration/deceleration behavior of the vehicle. Therefore, the matching between the imagined vehicle behavior and the motion of the sound field in the vehicle cabin can be improved.
(2) In the vehicle acoustic control device of the present embodiment, the controller 21 is configured to set the sound field displacement amount β larger as the deviation ΔG for changing the acceleration/deceleration behavior of the vehicle is larger.
   As described above, by setting the sound field displacement amount β larger as the deviation ΔG is larger, the change in the acceleration/deceleration behavior depending on the acceleration/deceleration operation input can be effectively rendered.
(3) In the vehicle acoustic control device of the present embodiment, the maximum displacement amount +β_{MAX} in displacing the sound field in the acceleration direction is determined depending on the maximum acceleration determined for each vehicle, and the maximum displacement amount -β_{MAX} in displacing the sound field in the deceleration direction is determined depending on the maximum deceleration determined for each vehicle.
   As described above, by determining the maximum displacement amount β_{MAX} of the sound field depending on the maximum acceleration and the maximum deceleration determined for each vehicle, the acceleration/deceleration behavior suitable to the vehicle can be rendered.
(4) In the vehicle acoustic control device of the present embodiment, the controller 21 is configured to change the longitudinal distribution between the volume outputted from the front speaker and the volume outputted from the rear speaker so as to displace the sound field.
   As described above, by changing the longitudinal distribution of the volume to displace the sound field, the control for the sound field can be performed easily.
(5) In the vehicle acoustic control device of the present embodiment, the controller 21 is configured to output the primary sound by the plurality of speakers 23, to assume and generate the reverberating sound of the primary sound from the virtual wall 33 by assuming that there are the virtual wall 33 surrounding the periphery of the vehicle when viewed from above, and to output the reverberating sound by the plurality of speakers 23, as the secondary sound. Then, the controller 21 is configured to, when the operation input for changing the acceleration/deceleration behavior of the vehicle is made, displace the virtual wall 33 in the direction of the change in the actual acceleration/deceleration behavior of the vehicle depending on the deviation ΔG.
   As described above, by displacing the virtual wall 33 in the direction of the change in the acceleration/deceleration behavior, the displacement of the sound field can be rendered in a more realistic manner to obtain an acoustic effect giving the sense of reality.
(6) In the vehicle acoustic control method of the present embodiment, the plurality of speakers 23 disposed in the front and the rear of the periphery of the passenger are individually driven, whereby the sound field in the vehicle cabin is controlled. Then, when the operation input for changing the acceleration/deceleration behavior of the vehicle is made, the normative acceleration/deceleration GxT is set depending on the operation input, the actual acceleration/deceleration GxR is detected, and the sound field in the vehicle cabin is displaced depending on the deviation ΔG of the actual acceleration/deceleration GxR relative to the normative acceleration/deceleration GxT before the change in the actual acceleration/deceleration behavior of the vehicle to render the change in the vehicle behavior depending on the operation input.

As described above, since the sound field in the vehicle cabin is displaced depending on the deviation ΔG between the normative acceleration/deceleration GxT and the actual acceleration/deceleration GxR and depending on the operation input before the change in the actual acceleration/deceleration behavior of the vehicle to render the change in the vehicle behavior depending on the operation input, the matching between the imagined vehicle behavior and the motion of the sound field in the vehicle cabin can be improved.

Priority is claimed on Japanese Patent Application No. P2013-091682 (filed on April 24, 2013) and Japanese Patent Application No. P2013-091684 (filed on April 24, 2013), the entire content of which is incorporated by reference.

Here, the present invention has been described with reference to the definite number of embodiments; however, the scope of the present invention is not limited thereto and improvements and modifications of the embodiments based on the above disclosure are obvious to those skilled in the art.

### Reference Signs List

- 11: acoustic equipment
- 12: steering angle sensor
- 13: wheel speed sensor
- 14: 6-axis motion sensor
- 15: accelerator sensor
- 16: vacuum servo pressure sensor
- 17: navigation system
- 18: suspension stroke sensor
- 21: controller
- 22: amplifier
- 23: speaker
- 51: sound field displacement amount setting unit
- 52: sound signal adjustment instruction unit
- 61: normative acceleration/deceleration setting unit
- 62: deviation computing unit
- 63: sound field displacement amount setting unit
- 64: sound signal adjustment instruction unit

## Claims

1. A vehicle acoustic control device comprising:
a plurality of speakers each disposed on a periphery of a passenger;
a sound field control unit configured to control a sound field in a vehicle cabin by individually driving the plurality of speakers;
an acceleration/deceleration operation detection unit configured to detect an acceleration/deceleration operation;
an acceleration/deceleration behavior estimation unit configured to estimate an acceleration/deceleration behavior based on the acceleration/deceleration operation; and
an actual acceleration/deceleration behavior detection unit configured to detect an actual acceleration/deceleration behavior of a vehicle in acceleration/deceleration,
wherein the sound field control unit is configured to, when the acceleration/deceleration operation detection unit detects the acceleration/deceleration operation, change the sound field in the vehicle cabin in a direction of a change in the actual acceleration/deceleration behavior depending on an deviation between an estimated acceleration/deceleration behavior which is estimated by the acceleration/deceleration behavior estimation unit and the actual acceleration/deceleration behavior detected by the actual acceleration/deceleration behavior detection unit.

2. The vehicle acoustic control device according to claim 1, wherein the sound field control unit is configured to set an amount of a change of the sound field larger as the deviation is larger.

3. A vehicle acoustic control device comprising:
a plurality of speakers each disposed on a periphery of a passenger;
a sound field control unit configured to control a sound field in a vehicle cabin by individually driving the plurality of speakers; and
an acceleration/deceleration operation detection unit configured to detect an acceleration/deceleration operation,
wherein the sound field control unit is configured to, when the acceleration/deceleration operation detection unit detects the acceleration/deceleration operation, change the sound field in the vehicle cabin in a direction of a change in the actual acceleration/deceleration behavior depending on the acceleration/deceleration operation.

4. The vehicle acoustic control device according to 3, wherein the sound field control unit is configured to set an amount of a change of the sound field larger as the acceleration/deceleration operation is faster.

5. The vehicle acoustic control device according to any one of claims 1 to 4,
wherein a maximum amount of a change in changing the sound field in an acceleration direction by the sound field control unit is determined depending on a maximum acceleration determined for each vehicle, and
a maximum amount of a change in changing the sound field in a deceleration direction by the sound field control unit is determined depending on a maximum deceleration determined for each vehicle.

6. The vehicle acoustic control device according to any one of claims 1 to 5, wherein the sound field control unit is configured to change a longitudinal distribution between a volume outputted from a front speaker out of the plurality of speakers and a volume outputted from a rear speaker out of the plurality of speakers so as to displace the sound field.

7. The vehicle acoustic control device according to any one of claims 1 to 6, wherein the sound field control unit is configured to:
output a primary sound from each of the plurality of speakers;
assume that there is a virtual wall surrounding a periphery of the vehicle when viewed from above;
assume and generate a reverberating sound of the primary sound from the virtual wall;
output the reverberating sound from each of the plurality of speakers, as a secondary sound; and
change the virtual wall in the direction of the change in the actual acceleration/deceleration behavior.

8. A vehicle acoustic control method of controlling a sound field in a vehicle cabin by individually driving a plurality of speakers disposed on a front side and a rear side of a passenger, the vehicle acoustic control method comprising:
detecting an acceleration/deceleration operation;
estimating an acceleration/deceleration behavior based on the acceleration/deceleration operation;
detecting an actual acceleration/deceleration behavior of a vehicle in acceleration/deceleration; and
changing, when the acceleration/deceleration operation is detected, the sound field in the vehicle cabin in a direction of a change in the actual acceleration/deceleration behavior depending on an deviation between the estimated acceleration/deceleration behavior and the actual acceleration/deceleration behavior.
